# EUROPEAN PATENT APPLICATION

(11) **EP 4 411 297 A1**
(43) Date of publication of application: **07.08.2024**
(21) Application number: 22891901.5
(22) Date of filing: 04.11.2022
(51) Int. Cl.: F26B 5/04, F26B 21/14, F26B 25/22, H01M 10/058

(54) **BATTERY CELL BAKING DEVICE AND CONTROL SYSTEM THEREOF, AND BATTERY CELL BAKING PROCESS**

(30) Priority: 13.11.2021 CN 202111343340
(71) Applicant: Contemporary Amperex Technology Co., Limited, Ningde, Fujian 352100 (CN)
(72) Inventor: MA, Zhiqiang, Ningde, Fujian 352100 (CN); ZHENG, Shishuo, Ningde, Fujian 352100 (CN); WEI, Dong, Ningde, Fujian 352100 (CN); GUAN, Feng, Ningde, Fujian 352100 (CN); WANG, Zhihui, Ningde, Fujian 352100 (CN)
(74) Representative: Gong, Jinping
(86) International application number: PCT/CN2022/129796
(87) International publication number: WO 2023/083106

(57) **Abstract**

This application relates to a battery cell baking apparatus, a control system thereof, and a battery cell baking process. A vacuum breaking pipeline is divided into a first branch and a second branch that are independent of each other. Before a battery cell in a reaction chamber is baked, gas is heated and pressure-regulated first. Before the gas reach a standard condition, the first branch is configured to discharge the gas. Once the gas meets the standard, the second branch is quickly switched on to introduce the gas into the reaction chamber. This avoids a problem of low moisture removal efficiency of the battery cell caused by battery cell aspiration in a gas environment of ambient temperature and pressure, thereby accelerating moisture removal efficiency.

## Description

### CROSS-REFERENCE TO RELATED APPLICATIONS

This application refers to China Patent Application No. 202111343340.0, filed on November 13, 2021 and entitled "BATTERY CELL BAKING APPRATUS, CONTROL SYSTEM THEREOF, AND BATTERY CELL BAKING PROCESS", which is incorporated herein by reference in its entirety.

### TECHNICAL FIELD

This application relates to the field of battery technologies and particularly to a battery cell baking apparatus, a control system thereof, and a battery cell baking process.

### BACKGROUND

It is crucial to control the moisture content of battery cells in the manufacturing process of lithium-ion batteries. Due to the chemical reaction between the inorganic salt solute in the electrolyte of lithium-ion batteries and water, HF is generated, which has a detrimental effect on the film formation and stability of the positive and negative electrode materials, thereby affecting the electrochemical characteristics of lithium-ion batteries.

In order to effectively reduce the internal moisture content of lithium-ion batteries, the current method used is to bake the battery cells. However, in the baking process of the battery cells, when the introduced ambient temperature protective gas comes into contact with the high-temperature battery cells, the water molecules carried by the gas will adhere to the interior of the battery cells, affecting the water removal effect of the battery cells.

### SUMMARY

In view of that, it is necessary to provide a battery cell baking apparatus, a control system thereof, and a battery cell baking process to address the problem of poor moisture removal effect during battery cell baking.

According to a first aspect, this application provides a battery cell baking apparatus, including:
a reaction furnace, the reaction furnace including a reaction chamber configured for placing and baking a battery cell;
a heating and pressure regulating component configured to heat and regulate pressure of gas entering the reaction chamber; and
a vacuum breaking pipeline, the vacuum breaking pipeline including a first branch and a second branch that are independent of each other;
where the first branch is connected between the heating and pressure regulating component and an external environment to discharge residual waste gas, and the second branch is connected between the heating and pressure regulating component and the reaction chamber to introduce heated and pressure-regulated gas into the reaction chamber.

In the technical solution of this embodiment of this application, the provision of the first branch and the second branch enables gas to be heated and pressure-regulated while the battery cell is placed in the reaction chamber for preheating, so that gas that has not reached a target value is discharged from the vacuum breaking pipeline through the first branch, and when the gas reaches the target value, it is introduced into the reaction chamber through the second branch. This allows the battery cell to respire in a high-temperature and high-pressure gas environment, thereby removing moisture and improving moisture removal efficiency of the battery cell.

In some embodiments, the first branch is equipped with an exhaust duct and a first baffle valve, where one end of the exhaust duct is connected to the vacuum breaking pipeline through the first baffle valve and the other end thereof is connected to the external environment, and the first baffle valve is configured to control opening and closing of the first branch.

In the technical solution of this embodiment of this application, gas is treated in a plant exhaust gas treatment apparatus before being discharged into the atmosphere, thereby reducing environmental pollution.

In some embodiments, the second branch is equipped with a second baffle valve, and the second baffle valve is configured to control opening and closing of the second branch.

In some embodiments, the heating and pressure regulating component includes a hot air gun and a pressure regulating valve, the hot air gun being connected to an external gas source, and the pressure regulating valve being positioned between the hot air gun and the vacuum breaking pipeline.

In the technical solution of this embodiment of this application, the external gas source supplies gas to the hot air gun, and the hot air gun heats the gas. The heated gas then passes through the pressure regulating valve for a pressure regulation, so that the gas reaches a target temperature and pressure.

In some embodiments, the heating and pressure regulating component includes a filter, the filter being positioned between the external gas source and the hot air gun.

In the technical solution of this embodiment of this application, the filter filters the gas that enters the hot air gun for heating, removing impurities from the gas to ensure that the gas entering the reaction chamber is clean and free of impurities.

In some embodiments, the heating and pressure regulating component includes a flow meter, and the flow meter is positioned between the external gas source and the hot air gun to monitor gas flow.

In the technical solution of this embodiment of this application, with the gas flow monitored in real-time, it is possible to determine whether gas delivery in the battery cell baking apparatus is normal.

According to a second aspect, this application provides a control system for monitoring gas heating status inside the foregoing battery cell baking apparatus. The control system includes:
a control module;
a detection module, positioned at a gas outlet of the heating and pressure regulating component and communicatively connected to the control module, and configured to detect gas temperature at the gas outlet and transmit the gas temperature to the control module; and
a collection module, communicatively connected to both the control module and the detection module, and configured to monitor signal transmission status of the control system and transmit the signal transmission status to the control module;
where the control module is configured to generate an alarm instruction when the gas temperature and/or the signal transmission status of the control system is abnormal.

In the technical solution of this embodiment of this application, the control system can simultaneously detect temperature abnormality and signal abnormality, allowing for more precise control of temperature of the gas entering the reaction chamber, thus ensuring normal operation of the battery cell baking apparatus from multiple aspects.

In some embodiments, the control module includes a first controller, and the detection module includes a first detector, the first detector being positioned at the gas outlet of the heating and pressure regulating component and communicatively connected to the first controller.

In some embodiments, the control module includes a second controller, and the detection module includes a second detector, the second detector being positioned at the gas outlet of the heating and pressure regulating component and communicatively connected to the second controller;
where the first controller is communicatively connected to the second controller, and the first controller is configured to receive a detection result transmitted by the second controller and issue an instruction.

In the technical solution of this embodiment of this application, the first controller and the second controller can communicate and compare the detection result in real-time, achieving a dual-redundancy design and improving safety of the control system.

According to a third aspect, this application provides a battery cell baking process using the foregoing battery cell baking apparatus. The battery cell baking process includes steps of:
preheating and baking, where a preheating and baking time is set to a first preset time and a vacuum holding time to a second preset time, and after the battery cell is placed into the reaction chamber and preheated and baked for a duration of the first preset time, a vacuum is created and held for a duration of the second preset time, then protective gas is introduced into the reaction chamber to break the vacuum to the standard atmospheric pressure, and the reaction chamber is closed; and
vacuum baking, where a vacuum holding time is set to a third preset time and a vacuum-breaking holding time to a fourth preset time, and a vacuum is created inside the reaction chamber and held for a duration of the third preset time for vacuum-baking the battery cell, then the protective gas is introduced into the reaction chamber to break the vacuum to the standard atmospheric pressure which is held for a duration of the fourth preset time, and then another vacuum is created.

In some embodiments, a vacuum lower limit for vacuuming is 50 Pa.

In some embodiments, the protective gas is a gas heated to a target temperature and regulated to a target pressure by the heating and pressure regulating component.

In some embodiments, the target temperature ranges from 80°C to 120°C.

In some embodiments, the target temperature is 90°C.

In some embodiments, the target pressure ranges from 0.2 MPa to 0.6 MPa.

In some embodiments, the target pressure ranges from 0.2 MPa to 0.3 MPa.

In the foregoing battery cell baking apparatus, control system thereof, and battery cell baking process, the vacuum breaking pipeline is divided into the first branch and the second branch that are independent of each other. Before the battery cell in the reaction chamber is baked, the gas is heated and pressure-regulated by the heating and pressure regulating component. Before the gas reaches the standard temperature and pressure, the first branch is configured to discharge gas that does not meet the standard, and once the gas meets the standard, the second branch is quickly switched on to introduce the gas into the reaction chamber. This avoids the problem of low moisture removal efficiency of the battery cell caused by battery cell aspiration in a gas environment of ambient temperature and pressure, thereby accelerating moisture removal of the battery cell.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the embodiments below. The accompanying drawings are merely intended to illustrate the embodiments and are not intended to limit this application. In addition, in all the accompanying drawings, like parts are represented by like reference signs. In the accompanying drawings:
FIG. 1 is a schematic exploded view of a battery according to an embodiment of this application;
FIG. 2 is a schematic exploded view of a battery cell according to an embodiment of this application;
FIG. 3 is a schematic diagram of an overall structure of a battery cell baking apparatus according to an embodiment of this application;
FIG. 4 is a schematic diagram of a structure of a control system according to an embodiment of this application; and
FIG. 5 is a flowchart of a battery cell baking process according to an embodiment of this application.

100, battery cell baking apparatus; 200, control system; 10, battery; 20, reaction furnace; 30, heating and pressure regulating component; 40, vacuum breaking pipeline; 50, control module; 60, detection module; 70, collection module; 11, box; 12, battery cell; 21, reaction chamber; 31, hot air gun; 32, pressure regulating valve; 33, filter; 34, flow meter; 41, first branch; 42, second branch; 51, first controller; 52, second controller; 61, first detector; 62, second detector; 111, first part; 112, second part; 121, end cap; 122, housing; 123, electrode assembly; 411, exhaust duct; 412, first baffle valve; 413, plant exhaust gas treatment apparatus; 421, second baffle valve; 121a, electrode terminal.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, from the perspective of market development, lithium-ion batteries are widely used in electric vehicles and consumer electronics due to their advantages of high energy density, high power output, long cycle life, and low environmental pollution. With the continuous expansion of application fields of lithium-ion batteries, market demands for them are also constantly increasing.

A production process of lithium-ion batteries generally includes the following steps: the first step is electrode slurry preparation, which mainly involves mixing together an electrode active material, a binder, a solvent, and the like, and after sufficient stirring and dispersion, forming a slurry; the second step is coating, which involves uniformly coating a current collector (such as aluminum foil or copper foil) with the slurry prepared in the previous step in a specified thickness, followed by drying of the solvent; the third step is electrode plate cutting, which involves cutting an electrode plate prepared in the previous step into a specified size and shape; the fourth step is stacking, which involves assembling a positive electrode plate, a negative electrode plate, and a separator together, and after applying an adhesive, forming a jelly roll; the fifth step is battery assembly, which involves placing the jelly roll produced in a previous step into a housing and completing top sealing, side sealing, and the like (with a port reserved for electrolyte injection), forming a battery without electrolyte injected; the sixth step is electrolyte injection, which involves injecting a specified amount of electrolyte into the battery cell; and the seventh step is battery sealing, which involves evacuating gas inside the battery cell and completing the sealing in a vacuum environment.

During the foregoing production process, a large amount of water molecules will remain inside the battery cell, and moisture content inside the battery cell can directly affect electrochemical properties of the battery. Given this, it is a common practice at present to adopt a method of battery cell baking to remove residual water molecules inside the battery cell.

Currently, a primarily adopted method for battery cell baking is vacuum baking, which involves vacuuming a baking reaction furnace during a baking process to lower the boiling point of water, and then introducing a dry gas (usually nitrogen) to replace gas inside the reaction furnace, thereby removing the water molecules.

In the foregoing process, the applicant has observed that, because the battery cell has been preheated to a high temperature in the reaction furnace, when an ambient-temperature dry gas is introduced into the vacuum reaction furnace and the ambient-temperature dry gas comes into contact with the high-temperature battery cell inside the furnace, the water molecules carried by the gas will adhere to the interior of the battery cell, resulting in an increase rather than a decrease of water molecules inside the battery cell, which affects the moisture removal effect of the battery cell.

In view of the foregoing, in order to improve the moisture removal efficiency during a battery cell baking process and accelerate moisture removal of the battery cell, the applicant has conducted in-depth research and designed a battery cell baking apparatus that allows the battery cell to respire in a high-temperature and high-pressure gas environment, thereby improving moisture removal efficiency of the battery cell.

With such a battery cell baking apparatus to bake the battery cell, while the battery cell is preheated and baked in the reaction chamber, the gas is heated and pressure-regulated by a heating and pressure regulating component, and then the gas heated to a target temperature and regulated to a target pressure is introduced into the reaction chamber where the battery cell is placed. Compared to introducing gas at an ambient temperature and pressure, a high-temperature and high-pressure gas entering the reaction chamber, when coming into contact with the high-temperature battery cell, will not cause moisture in the gas to adhere to the battery cell, thereby improving the moisture removal effect during the battery cell baking.

It should be noted that the battery cell disclosed in the embodiments of this application can be used without limitation in electric apparatuses such as vehicles, ships, or aircrafts. A battery cell is the most basic element of a battery, and a plurality of battery cells are arranged and sealed in a box to form a battery, which serves as a power supply for various electric apparatuses. Such electric apparatuses can include, but are not limited to, mobile phones, tablets, laptops, electric toys, electric tools, electric bicycles, electric vehicles, ships, and spacecrafts.

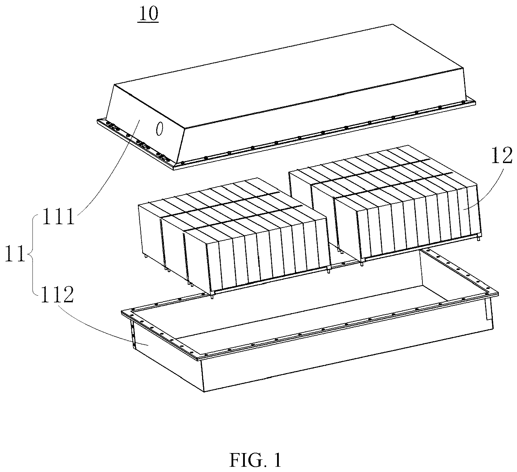

For ease of explanation, refer to FIG. 1. FIG. 1 is an exploded view of a battery 10 provided in some embodiments of this application. The battery 10 includes a box 11 and a battery cell 12, the battery cell 12 being accommodated within the box 11. The box 11 provides a space for accommodating the battery cell 12 and the box 11 may have various structures. In some embodiments, the box 11 may include a first part 111 and a second part 112, the first part 111 and the second part 112 being mutually engaged and the first part 111 and the second part 112 together defining the space for accommodating the battery cell 12. The second part 112 may be a hollow structure with one end open, and the first part 111 may be a plate-like structure, the first part 111 being engaged with the open side of the second part 112, so that the first part 111 and the second part 112 together defining the accommodating space. The first part 111 and the second part 112 may alternatively be both hollow structures with one side open, the open side of the first part 111 being engaged with the open side of the second part 112. Certainly, the box 11 formed by the first part 111 and the second part 112 may be in various shapes, such as a cylinder or a cuboid.

In the battery 10, there may be a plurality of battery cells 12, the plurality of battery cells 12 may be connected in series, in parallel, or in series-parallel. A series-parallel connection means that the plurality of battery cells 12 are connected both in series and in parallel. The plurality of battery cells 12 may be directly connected in series, in parallel, or in series-parallel, and then a complete unit formed by the plurality of battery cells 12 is accommodated within the box 11. Certainly, the battery 10 may alternatively be formed by first connecting the plurality of battery cells 12 in series, in parallel, or in series-parallel to form battery modules, and then connecting the battery modules in series, in parallel, or in series-parallel to form a complete unit, which is accommodated within the box 11. The battery 10 may also include other structures, for example, the battery 10 may also include a busbar component, which is configured to realize electrical connections between the plurality of battery cells 12.

Each battery cell 12 may be a secondary battery or a primary battery; it may also be a lithium-sulfur battery, a sodium-ion battery, or a magnesium-ion battery, but is not limited to those. The battery cell 12 may be cylindrical, flat, cuboid, or in other shapes.

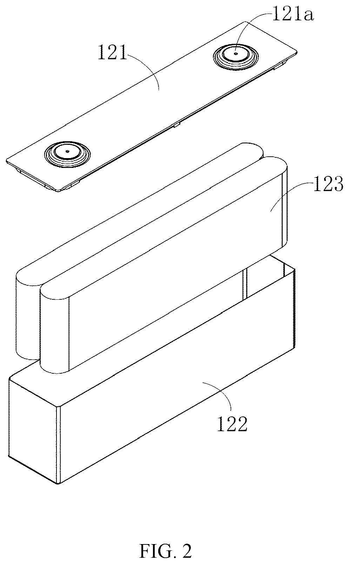

Refer to FIG. 2. FIG. 2 is a schematic exploded view of a structure of the battery cell 12 provided in some embodiments of this application. The battery cell 12 refers to the smallest unit that constitutes a battery. As shown in FIG. 2, the battery cell 12 includes an end cap 121, a housing 122, an electrode assembly 123, and other functional components.

The end cap 121 is a component that covers an opening of the housing 122 to isolate an internal environment of the battery cell 12 from an external environment. Without limitation, shape of the end cap 121 may be adapted to shape of the housing 122 to match the housing 122. Optionally, the end cap 121 may be made of a material with certain hardness and strength (such as aluminum alloy), so that the end cap 121 is less likely to deform under compression or a collision, enabling the battery cell 12 to have higher structural strength and better safety performance. Functional components such as an electrode terminal 121a may be provided on the end cap 121. The electrode terminal 121a can be configured to electrically connect to the electrode assembly 123 for outputting or inputting electric energy of the battery cell 12. In some embodiments, the end cap 121 may also be equipped with a pressure relief mechanism for releasing internal pressure when the internal pressure or temperature of the battery cell 12 reaches a threshold. The end cap 121 may also be made of various materials, such as copper, iron, aluminum, stainless steel, aluminum alloy, or plastic, which is not particularly limited in the embodiments of this application. In some embodiments, an insulating component may be provided on an inner side of the end cap 121, the insulating component being configured to isolate electrical connection components inside the housing 122 from the end cap 121, thereby reducing the risk of a short circuit. By way of example, the insulating component may be made of plastic, rubber, or the like.

The housing 122 is a component used to cooperate with the end cap 121 to create the internal environment of the battery cell 12, where the internal environment created can be used to accommodate the electrode assembly 123, an electrolyte, and other components. The housing 122 and the end cap 121 may be separate components, and an opening may be provided in the housing 122. The end cap 121 covers the opening to create the internal environment of the battery cell 12. Without limitation, the end cap 121 and the housing 122 may be integrated. Specifically, the end cap 121 and the housing 122 may form a common connecting surface before other components are housed, and when it is necessary to seal the interior of the housing 122, the end cap 121 is placed to cover the housing 122. The housing 122 may be in various shapes and sizes, such as cuboid, cylindrical, and hexagonal. Specifically, the shape of the housing 122 may be determined based on a specific shape and size of the electrode assembly 123. The housing 122 may be made of various materials, such as copper, iron, aluminum, stainless steel, aluminum alloy, or plastic, which is not particularly limited in the embodiments of this application.

The electrode assembly 123 is a component where electrochemical reactions occur within the battery cell 12. The housing 122 may contain one or more electrode assemblies 123. The electrode assembly 123 is mainly composed of a positive electrode plate and a negative electrode plate that are wound or stacked together, and there is usually a separator between the positive electrode plate and the negative electrode plate. Portions of the positive electrode plate and the negative electrode plate that contain an active material constitute a main body of the electrode assembly 123, and portions of the positive electrode plate and the negative electrode plate without the active material each constitute a tab. The positive electrode tab and the negative electrode tab may be both positioned at one end of the main body or respectively positioned at opposite ends of the main body. During a charge or discharge process of the battery, the positive electrode active material and the negative electrode active material react with the electrolyte, and the tabs are connected to electrode terminals to form a current loop.

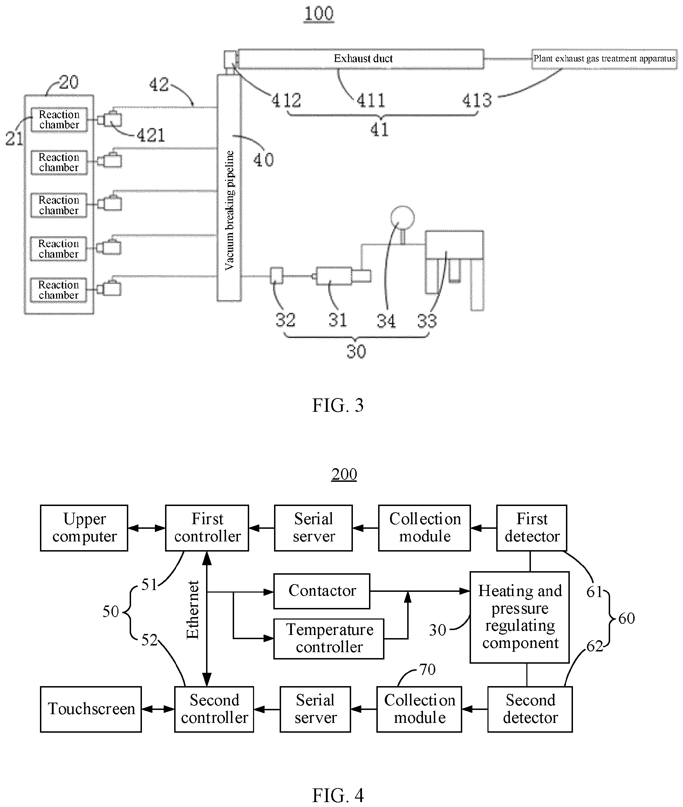

Refer to FIG. 3. An embodiment of this application provides a battery cell baking apparatus 100, including a reaction furnace 20, a heating and pressure regulating component 30, and a vacuum breaking pipeline 40 connecting the two. The reaction furnace 20 includes a reaction chamber 21 configured for placing and baking the battery cell. The heating and pressure regulating component 30 is configured to heat and regulate pressure of gas entering the reaction chamber 21. The vacuum breaking pipeline 40 includes a first branch 41 and a second branch 42 that are independent of each other. Specifically, the first branch 41 is connected between the heating and pressure regulating component 30 and the external environment to discharge residual waste gas, and the second branch 42 is connected between the heating and pressure regulating component 30 and the reaction chamber 21 to introduce heated and pressure-regulated gas into the reaction chamber 21.

Specifically in this embodiment, the vacuum breaking pipeline 40 is provided with an inlet, a first outlet, and a second outlet. The inlet is connected to the heating and pressure regulating component 30, the first outlet is connected to the external environment, and the second outlet is connected to the reaction chamber 21. Thus, the first branch 41 is formed between the inlet and the first outlet, and the second branch 42 is formed between the inlet and the second outlet.

Furthermore, the battery cell is first placed in the reaction chamber 21 for preheating and baking. During this process, gas flows between the heating and pressure regulating component 30 and the vacuum breaking pipeline 40 and is heated and pressure-regulated. When gas temperature or pressure has not reached a target value, the inlet and the first outlet are opened while the second outlet is closed, and the gas is discharged from the vacuum breaking pipeline 40 through the first branch 41. In this process, the residual waste gas in the vacuum breaking pipeline 40 can also be discharged. When the gas temperature and pressure both reach the target values, the inlet and the second outlet are opened while the first outlet is closed, and the gas is introduced into the reaction chamber 21 through the second branch 42, allowing the battery cell to respire in a high-temperature and high-pressure gas environment, thereby removing moisture and significantly improving moisture removal efficiency of the battery cell.

In some embodiments, the first branch 41 is equipped with an exhaust duct 411 and a first baffle valve 412. One end of the exhaust duct 411 is connected to the vacuum breaking pipeline 40 through the first baffle valve 412 and the other end thereof is connected to the external environment, and the first baffle valve 412 is configured to control opening and closing of the first branch 41.

Specifically in this embodiment, one end of the exhaust duct 411 is connected to the vacuum breaking pipeline 40 through the first baffle valve 412, and the other end thereof is connected to a plant exhaust gas treatment apparatus 413. The first baffle valve 412 is positioned between the first outlet and the exhaust duct 411. When gas temperature or pressure has not reached the target value, the first baffle valve 412 is opened, and the gas in the vacuum breaking pipeline 41 is drawn out to the plant exhaust gas treatment apparatus 413 through the exhaust duct 411. The gas is treated in the plant exhaust gas treatment apparatus 413 before being discharged into the atmosphere, thereby reducing environmental pollution.

In some embodiments, the second branch 42 is equipped with a second baffle valve 421, the second baffle valve 421 being configured to control opening and closing of the second branch 42.

Specifically in this embodiment, the second baffle valve 421 is positioned between the second outlet and the reaction chamber 21. When the gas temperature and pressure both reach the target values, the second baffle valve 421 is opened to allow the gas to enter the reaction chamber 21. Thus, gas flow into the reaction chamber 21 can be flexibly controlled to ensure stability of the gas environment inside the reaction chamber 21.

It should be noted that the reaction furnace 20 may include a plurality of independent reaction chambers 21, thereby allowing separate baking of a plurality of battery cells. Correspondingly, each reaction chamber 21 is equipped with a second baffle valve 421 to independently control the gas environment inside each reaction chamber 21. This allows for simultaneous baking of the plurality of battery cells and ensures precise control of the gas environment inside each reaction chamber 21, making the battery cell baking process safer and more reliable.

In some embodiments, the heating and pressure regulating component 30 includes a hot air gun 31 and a pressure regulating valve 32. The hot air gun 31 is connected to an external gas source, and the pressure regulating valve 32 is positioned between the hot air gun 31 and the vacuum breaking pipeline 40. The external gas source supplies gas to the hot air gun 31, and the hot air gun 31 heats the gas. The heated gas then passes through the pressure regulating valve 32 for a pressure regulation, so that the gas reaches a target temperature and pressure.

Furthermore, the heating and pressure regulating component 30 includes a filter 33, and the filter 33 is positioned between the external gas source and the hot air gun 31. The filter 33 filters the gas that enters the hot air gun 31 for heating, removing impurities from the gas to ensure that the gas entering the reaction chamber 21 is clean and free of the impurities.

Moreover, the heating and pressure regulating component 30 includes a flow meter 34, and the flow meter 34 is positioned between the external gas source and the hot air gun 31 to monitor the gas flow. With the gas flow monitored in real-time, it is possible to determine whether gas delivery in the battery cell baking apparatus 100 is normal. When the gas flow entering the vacuum breaking pipeline 40 is abnormal, it will inevitably affect the gas entering the reaction chamber 21, thereby affecting the battery cell baking process. Therefore, by setting the flow meter 34, the battery cell baking process can be quickly reflected, ensuring normal operation of the battery cell baking apparatus 100.

Refer to FIG. 4. Based on the same concept as the foregoing battery cell baking apparatus 100, this application also provides a control system 200 for monitoring gas heating status inside the foregoing battery cell baking apparatus 100, including a control module 50, a detection module 60, and a collection module 70, which are communicatively connected. The detection module 60 is positioned at a gas outlet of the heating and pressure regulating component 30 and communicatively connected to the control module 50 to detect gas temperature at the gas outlet and transmit the gas temperature to the control module 50. The collection module 70 is communicatively connected to both the control module 50 and the detection module 60 to monitor signal transmission status of the control system 200 and transmit the signal transmission status to the control module 50. In addition, the control module is configured to generate an alarm instruction when the gas temperature and/or the signal transmission status of the control system is abnormal.

For efficient operation of the foregoing battery cell baking apparatus 100, in this application, the control system 200 monitors the battery cell baking apparatus 100 in real-time. Specifically, the detection module 60 is positioned at the gas outlet of the hot air gun 31 to detect temperature of the heated gas, ensuring that gas temperature reaches the target value and remains stable. The collection module 70 monitors the signal transmission status between modules within the control system 200, ensuring normal transmission between the modules, and transmits the monitoring result to the control module 50 for handling. When the control module 50 receives a signal indicating abnormal gas temperature, such as a gas temperature significantly exceeding a specified value, a gas temperature significantly lower than the specified value, or abnormal gas temperature fluctuation, or when the control module 50 receives a signal indicating abnormal signal transmission, such as a network communication alarm, a contactor on-off abnormality alarm, a solid-state on-off abnormality alarm, the control module issues an alarm signal or directly sends an instruction to disconnect the abnormal circuit.

Specifically in this embodiment, the control system 200 includes an alarm module (not shown in the figure), and the alarm module is communicatively connected to the control module 50. When the detection module 60 detects abnormal gas temperature, such as low temperature, high temperature, abnormal temperature fluctuation, or no change in temperature within one minute, the collection module 70 transmits an abnormal signal to the control module 50, and the control module 50 conducts handling and sends the signal to the alarm module to trigger an alarm. When the collection module 70 collects an abnormal signal between the modules, such as communication connection abnormality or system signal on-off abnormality, the collection module also transmits the abnormal signal to the control module 50, and the control module 50 conducts handling and sends the signal to the alarm module to trigger an alarm.

Thus, the control system 200 can simultaneously detect temperature abnormality and signal abnormality, allowing for more precise control of temperature of the gas entering the reaction chamber 21 and ensuring normal operation of the battery cell baking apparatus 100 from multiple aspects.

In some embodiments, the control module 50 includes a first controller 51, and the detection module 60 includes a first detector 61. The first detector 61 is positioned at the gas outlet of the heating and pressure regulating component 30 and is communicatively connected to the first controller 51.

Furthermore, the control module 50 includes a second controller 52, and the detection module 60 includes a second detector 62. The second detector 62 is positioned at the gas outlet of the heating and pressure regulating component 30 and is communicatively connected to the second controller 52. The first controller 51 is communicatively connected to the second controller 52, and the first controller 51 is configured to receive a detection result from the second controller 52 and issue a command accordingly.

Specifically in this embodiment, the first controller 51 serves as a primary PLC, and the second controller 52 serves as a secondary PLC. The primary PLC and the secondary PLC are communicatively connected via Ethernet. The first detector 61 and the second detector 62 independently detect gas temperature at the gas outlet of the hot air gun 31 and provide a detection result to the primary PLC and the secondary PLC, respectively. It should be noted that the secondary PLC only functions to receive, analyze, and transmit signals, and does not issue instructions. Therefore, after receiving a signal, the secondary PLC analyzes the signal and transmits an analysis result to the primary PLC, and the primary PLC then sends instructions uniformly. The primary PLC and the secondary PLC can communicate and compare the detection result in real-time, thereby achieving a dual-redundancy design and improving safety of the control system.

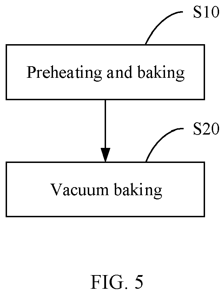

Refer to FIG. 5. Based on the same concept as the foregoing battery cell baking apparatus 100, this application further provides a battery cell baking process for operating the battery cell baking apparatus 100. The process includes the following steps.

S 10: Preheating and baking, where a preheating and baking time is set to a first preset time and a vacuum holding time to a second preset time, and after the battery cell is placed into the reaction chamber 21 and preheated and baked for a duration of the first preset time, a vacuum is created and held for a duration of the second preset time, then protective gas is introduced into the reaction chamber 21 to break the vacuum to the standard atmospheric pressure, and the reaction chamber 21 is closed.

Since the battery cell itself contains a certain amount of water molecules inside before being baked, it is necessary to preheat and bake the battery cell to rapidly evaporate the water molecules inside and reach a relatively stable value before proceeding to further vacuum baking.

When the reaction chamber 21 is in a vacuum state, the water molecules inside the battery cell reach equilibrium with the external environment. In this case, the water molecules inside the battery cell remain in a stable state and cannot be released. Therefore, it is necessary to periodically break the vacuum in the reaction chamber 21 to disrupt the equilibrium state and allow the water molecules to be released.

Specifically in this embodiment, during the preheating and baking step, the first preset time is set to 30 minutes, the second preset time is set to 1 minute, and a respiration interval of the battery cell is set to 30 minutes.

First, the battery cell is placed into the reaction chamber 21 and preheated and baked. During this time, the water molecules inside the battery cell are released into the reaction chamber 21. After preheating and baking for 30 minutes, a vacuum is created and held for 1 minute to remove the water molecules from the reaction chamber 21. During the 1-minute vacuum holding period, the water molecules inside the battery cell remain in the equilibrium state with the vacuum environment of the reaction chamber 21, and therefore the water molecules inside the battery cell cannot be released into the reaction chamber 21. After the 1 minute, the protective gas is introduced into the reaction chamber 21, and the vacuum is broken to the standard atmospheric pressure. During the vacuum breaking process, the equilibrium state inside the reaction chamber 21 is disrupted, allowing the water molecules inside the battery cell to be released into the reaction chamber 21. This completes a complete respiration cycle. After a plurality of such respiration cycles, the moisture content inside the battery cell is measured. Once the moisture content is within a specified range, the preheating and baking step is completed.

S20: Vacuum baking, where a vacuum holding time is set to a third preset time and a vacuum-breaking holding time to a fourth preset time, and a vacuum is created inside the reaction chamber 21 and held for a duration of the third preset time for vacuum-baking the battery cell, then the protective gas is introduced into the reaction chamber 21 to break the vacuum to the standard atmospheric pressure which is held for a duration of the fourth preset time, and then another vacuum is created.

After the preheating and baking step is completed, moisture content inside the battery cell is regionally stable. Therefore, further baking and moisture removal need to be performed through vacuum baking.

Specifically in this embodiment, during the vacuum baking step, the third preset time is set to 30 minutes, the fourth preset time is set to 1 minute, and the respiration interval of the battery cell is set to 30 minutes. First, a vacuum is created in the reaction chamber 21 and held for 30 minutes and the battery cell is baked under the vacuum. After 30 minutes of vacuum baking, the water molecules inside the battery cell evaporate into the reaction chamber 21. However, at this point, the battery cell and the vacuum environment of the reaction chamber 21 are in the equilibrium state, and no further water molecules can be evaporated. At this point, the protective gas is introduced into the reaction chamber 21 to break the vacuum to the standard atmospheric pressure which is held for 1 minute to disrupt the equilibrium state. Then, another vacuum is created in the reaction chamber 21 and held for 30 minutes. By now, a complete respiration cycle is completed. After a plurality of such respiration cycles, the moisture content inside the battery cell is measured. Once the moisture content reaches a standard value, the vacuum baking step is completed.

During the foregoing preheating and baking step and the vacuum baking step, the protective gas is a gas that has been heated to a target temperature and regulated to a target pressure by the heating and pressure regulating component 30. That is, the protective gas is heated to the target temperature by the hot air gun 31 and regulated to the target pressure by the pressure regulating valve 32 before entering the reaction chamber 21. Since the battery cell is already at a high temperature inside the reaction chamber 21, introducing the gas that has been heated by the hot air gun 31 and pressure-regulated by the pressure regulating valve 32 into the reaction chamber 21 can prevent the water molecules carried by the gas from adhering to the interior of the battery cell, thereby improving the moisture removal efficiency.

In some embodiments, a vacuum lower limit for vacuuming is set to 50 Pa, the target temperature ranges from 80°C to 120°C, and the target pressure ranges from 0.2 MPa to 0.6 MPa. Specifically in this embodiment, the target temperature is 90°C, and the target pressure ranges from 0.2 MPa to 0.3 MPa.

In practical use of this application, the battery cell is first placed into the reaction chamber 21 and preheated and baked. After preheating and baking for 30 minutes, the reaction chamber 21 is vacuumed to the vacuum lower limit of 50 Pa which is held for 1 minute. At the same time, the gas is introduced into the battery cell baking apparatus. After passing through the filter 33, the gas is heated by the hot air gun 31, and the heated gas is then pressure-regulated by the pressure regulating valve 32.

The gas pressure is adjusted to 0.2 MPa to 0.3 MPa. Before the gas temperature reaches 90°C, the first baffle valve 412 is opened and the second baffle valve 421 is closed. The exhaust duct 411 is used to extract gas that has not reached the target temperature into the plant exhaust gas treatment apparatus 413. During this process, the exhaust duct 411 can also extract other remaining gas in the vacuum breaking pipeline 40 into the plant exhaust gas treatment apparatus 413. After being treated by the plant exhaust gas treatment apparatus 413, the gas is discharged into the atmosphere.

When the gas temperature reaches 90°C, the first baffle valve 412 is closed and the second baffle valve 421 is opened. The gas is introduced into the reaction chamber 21 to break the vacuum to the standard atmospheric pressure, and then another vacuum is created in the reaction chamber 21. This completes the complete respiration cycle. After a plurality of such respiration cycles, when moisture content inside the battery cell reaches the specified range, the vacuum baking step continues.

During the vacuum baking step, the reaction chamber 21 is first vacuumed to the vacuum lower limit of 50 Pa which is held for 30 minutes. Then the gas whose pressure has been regulated to 0.2 MPa to 0.3 MPa and temperature heated to 90°C is introduced into the reaction chamber 21 to break the vacuum to the standard atmospheric pressure, which is held for 1 minute. Then another vacuuming process follows until the vacuum lower limit of 50 Pa is reached. This completes the complete respiration cycle. After a plurality of such respiration cycles, when the moisture content inside the battery cell reaches the standard value, the entire battery cell baking process is completed.

During the foregoing process of the gas being heated by the hot air gun 31, the first detector 61 and the second detector 62 independently detect temperature at the gas outlet of the hot air gun 31, and feedback a detection result to the primary PLC and the secondary PLC, respectively. The primary PLC and the secondary PLC then compare the data to realize dual-redundancy detection of gas temperature to ensure accuracy of the gas temperature.

The battery cell baking apparatus 100, the control system 200 thereof, and the battery cell baking process in the foregoing embodiments have at least the following advantages:
(1) the vacuum breaking pipeline 40 is divided into the first branch 41 and the second branch 42 that are independent of each other, allowing the gas to circulate and be heated within the vacuum breaking pipeline 40, which enables the gas to be heated simultaneously when the battery cell is being preheated, and allows the high-temperature and high-pressure gas to be introduced into the reaction chamber 21, thereby preventing the water molecules carried by the gas from adhering to the interior of the battery cell and improving moisture removal efficiency;
(2) the exhaust duct 411 extracts the gas in the vacuum breaking pipeline 40 that does not meet the temperature and pressure requirements into the plant exhaust gas treatment apparatus 413, so that the gas is treated by the plant exhaust gas treatment apparatus 413 before being discharged into the environment, reducing environmental pollution;
(3) a second baffle valve 421 is correspondingly provided between each reaction chamber 21 and the vacuum breaking pipeline 40, enabling independent control of opening and closing between each reaction chamber 21 and the vacuum breaking pipeline 40, allowing the battery cell in each reaction chamber 21 to be independently baked;
(4) the detection module 60 and the collection module 70 are configured to enable detection of temperature abnormality and signal abnormality, respectively, and the alarm module is configured to trigger alarms, allowing for more precise control of temperature of the gas entering the reaction chamber 21 and ensuring normal operation of the battery cell baking apparatus 100, thereby improving safety performance; and
(5) the first detector 61 and the second detector 62 are configured to independently detect gas temperature at the gas outlet of the hot air gun 31, and feedback a detection result to the primary PLC and the secondary PLC, respectively. The primary PLC and the secondary PLC then compare the data to realize a dual-redundancy design, thereby improving safety of the control system.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell baking apparatus, comprising:
a reaction furnace, the reaction furnace comprising a reaction chamber configured for placing and baking a battery cell;
a heating and pressure regulating component configured to heat and regulate pressure of gas entering the reaction chamber; and
a vacuum breaking pipeline, the vacuum breaking pipeline comprising a first branch and a second branch that are independent of each other;
wherein the first branch is connected between the heating and pressure regulating component and an external environment to discharge residual waste gas, and the second branch is connected between the heating and pressure regulating component and the reaction chamber to introduce heated and pressure-regulated gas into the reaction chamber.

2. The battery cell baking apparatus according to claim 1, wherein the first branch is equipped with an exhaust duct and a first baffle valve, wherein one end of the exhaust duct is connected to the vacuum breaking pipeline through the first baffle valve and the other end thereof is connected to the external environment, and the first baffle valve is configured to control opening and closing of the first branch.

3. The battery cell baking apparatus according to claim 1 or 2, wherein the second branch is equipped with a second baffle valve, the second baffle valve being configured to control opening and closing of the second branch.

4. The battery cell baking apparatus according to any one of claims 1 to 3, wherein the heating and pressure regulating component comprises a hot air gun and a pressure regulating valve, the hot air gun being connected to an external gas source, and the pressure regulating valve being positioned between the hot air gun and the vacuum breaking pipeline.

5. The battery cell baking apparatus according to claim 4, wherein the heating and pressure regulating component comprises a filter, the filter being positioned between the external gas source and the hot air gun.

6. The battery cell baking apparatus according to claim 4 or 5, wherein the heating and pressure regulating component comprises a flow meter, the flow meter being positioned between the external gas source and the hot air gun to monitor gas flow.

7. A control system for monitoring gas heating status inside the battery cell baking apparatus according to any one of claims 1 to 6, comprising:
a control module;
a detection module, wherein the detection module is positioned at a gas outlet of the heating and pressure regulating component and communicatively connected to the control module, and the detection module is configured to detect gas temperature at the gas outlet and transmit the gas temperature to the control module; and
a collection module, wherein the collection module is communicatively connected to both the control module and the detection module, and the collection module is configured to monitor signal transmission status of the control system and transmit the signal transmission status to the control module;
wherein the control module is configured to generate an alarm instruction when the gas temperature and/or the signal transmission status of the control system is abnormal.

8. The control system according to claim 7, wherein the control module comprises a first controller, and the detection module comprises a first detector, the first detector being positioned at the gas outlet of the heating and pressure regulating component and communicatively connected to the first controller.

9. The control system according to claim 8, wherein the control module comprises a second controller, and the detection module comprises a second detector, the second detector being positioned at the gas outlet of the heating and pressure regulating component and communicatively connected to the second controller;
wherein the first controller is communicatively connected to the second controller, and the first controller is configured to receive detection results transmitted by the second controller and issue instructions.

10. A battery cell baking process using the battery cell baking apparatus according to any one of claims 1 to 6 for battery cell baking, the battery cell baking process comprising steps of:
preheating and baking, wherein a preheating and baking time is set to a first preset time and a vacuum holding time to a second preset time, and after the battery cell is placed into the reaction chamber and preheated and baked for a duration of the first preset time, a vacuum is created and held for a duration of the second preset time, then protective gas is introduced into the reaction chamber to break the vacuum to the standard atmospheric pressure, and the reaction chamber is closed; and
vacuum baking, wherein a vacuum holding time is set to a third preset time and a vacuum-breaking holding time to a fourth preset time, and a vacuum is created inside the reaction chamber and held for a duration of the third preset time for vacuum-baking the battery cell, then the protective gas is introduced into the reaction chamber to break the vacuum to the standard atmospheric pressure which is held for a duration of the fourth preset time, and then another vacuum is created.

11. The battery cell baking process according to claim 10, wherein a vacuum lower limit for vacuuming is 50 Pa.

12. The battery cell baking process according to claim 10 or 11, wherein the protective gas is a gas heated to a target temperature and regulated to a target pressure by the heating and pressure regulating component.

13. The battery cell baking process according to claim 12, **characterized in that** the target temperature ranges from 80°C to 120°C.

14. The battery cell baking process according to claim 12 or 13, **characterized in that** the target temperature is 90°C.

15. The battery cell baking process according to claim 12, **characterized in that** the target pressure ranges from 0.2 MPa to 0.6 MPa.

16. The battery cell baking process according to claim 12 or 15, **characterized in that** the target pressure ranges from 0.2 MPa to 0.3 MPa.
